# EUROPÄISCHE PATENTSCHRIFT

(11) **EP 0 559 925 B1**
(45) Veröffentlichungstag und Bekanntmachung des Hinweises auf die Patenterteilung: **13.09.1995**
(21) Anmeldenummer: 92103930.1
(22) Anmeldetag: 07.03.1992
(51) Int. Cl.: G01F 25/00, B67D 5/08

(54) **Verfahren sowie Vorrichtung zum Sammeln des beim Prüfen und Einstellen der Funktion bzw. Messgenauigkeit einer Kraftstoffzapfsäule anfallenden Kraftstoffes**
Method and device for the collection of residual fuel during testing and adjusting the function and measuring accurancy of a fuel dispenser
Procédé et dispositif pour la collection du carburant résiduel pendant l'examen et le réglage de la fonction et de la précision de mesure d'une pompe à carburant

(43) Veröffentlichungstag der Anmeldung: 15.09.1993
(73) Patentinhaber: SCHEIDT & BACHMANN GMBH, D-41238 Mönchengladbach (DE)
(72) Erfinder: Miller, Gert, W-4050 Mönchengladbach 1 (DE); Baumann, Gerd, W-5177 Titz (DE); Sauermann, Michael, W-4050 Mönchengladbach 4 (DE)
(74) Vertreter: Stenger, Watzke & Ring Patentanwälte

(56) Entgegenhaltungen:
- EP-A- 0 315 738
- EP-A- 0 461 770
- WO-A-91/00988
- FR-A- 2 596 151

## Beschreibung

Die Erfindung betrifft ein Verfahren zum Sammeln des beim Prüfen und Einstellen der Funktion bzw. Meßgenauigkeit einer Kraftstoffzapfsäule anfallenden Kraftstoffes, bei dem der Kraftstoff mittels einer Pumpe einem Erdtank entnommen und über eine vorzugsweise als Kolbenmesser ausgebildete Meßeinrichtung mit zugehöriger Anzeige für Grundpreis, Litermenge und zu zahlendem Betrag und eine ventilbetätigte Zapfpistole einem vorzugsweise geeichten Sammelgefäß zugeführt und nach erfolgtem Prüfen und Einstellen aus dem Sammelgefäß über ein durch ein Ventil verschließbare Rückführleitung in den Erdtank zurückgeführt wird.

Die Erfindung betrifft ferner eine Vorrichtung zum Sammeln des beim Prüfen und Einstellen der Funktion bzw. der Meßgenauigkeit einer Kraftstoffzapfsäule anfallenden Kraftstoffes, des mittels einer Pumpe über ein Filter mit Rückschlagventil aus einem Erdtank förderbar und über eine vorzugsweise als Kolbenmesser ausgebildete Meßeinrichtung mit zugehöriger Anzeige für Grundpreis, Litermenge und zu zahlendem Betrag sowie über eine ventilbetätigte Zapfpistole der Einfüllöffnung eines vorzugsweise geeichten Sammelgefäßes zuführbar ist, an welches eine durch ein Ventil verschließbare Rückführleitung zur Rückführung des Kraftstoffes in den Erdtank angeschlossen ist.

Entsprechend den einschlägigen gesetzlichen Vorschriften sind Kraftstoffzapfsäulen von Zeit zu Zeit neu zu eichen, um sicherzustellen, daß die von einer Meßeinrichtung erfaßte und der Preisberechnung zugrundegelegte Kraftstoffmenge der tatsächlich geförderten Kraftstoffmenge entspricht. Während des Prüfvorganges wird der von einer Pumpe aus einem Erdtank geförderte Kraftstoff mittels einer Zapfpistole in ein Sammelgefäß gefördert, welches in der Regel mit entsprechenden Eichmarkierungen versehen ist. Zur Ermittlung der Meßgenauigkeit der Meßeinrichtung der Kraftstoffzapfsäule wird die tatsächlich in das Sammelgefäß geförderte Kraftstoffmenge mit der in dem Preisrechner ermittelten und auf der zugehörigen Anzeige angezeigten Kraftstoffmenge verglichen und die Meßeinrichtung oder der Preisrechner dann entsprechend eingestellt. Der in dem Sammelgefäß angefallene Kraftstoff wird anschließend von Hand in den Erdtank zurückverfüllt. Hierbei treten häufig Schüttverluste auf. Ferner werden in unerwünschter Weise Kraftstoffdämpfe frei.

Ein demgegenüber weiterentwickeltes Verfahren sowie eine entsprechend weiterentwickelte Vorrichtung zum Sammeln des beim Prüfen und Einstellen der Funktion bzw. Meßgenauigkeit einer Kraftstoffzapfsäule anfallenden Kraftstoffes ist aus der WO-A-91/00988 bekannt. Bei diesem Verfahren wird die zur Durchführung der Messungen erforderliche Kraftstoffmenge nach Abschluß der Meß- bzw. Eichvorgänge über eine Leitung wieder dem Erdtank zugeführt, so daß Kraftstoffverluste weitgehend vermieden werden. Bei diesem bekannten Verfahren sind jedoch keinerlei Maßnahmen vorgesehen, um die während des Meß- bzw. Einstellvorganges in dem verwendeten Sammelgefäß anfallenden Kraftstoffgase daran zu hindern, in die Umgebung auszutreten. Ferner bietet das bei dem bekannten Verfahren verwendete Sammelgefäß keine Voraussetzungen dafür, in Verbindung mit einem bei modernen Tankstellen vorhandenen Gasrückführungssystem eingesetzt zu werden.

Der Erfindung liegt die **Aufgabe** zugrunde, ein Verfahren zum Sammeln des beim Prüfen und Einstellen der Funktion bzw. Meßgenauigkeit einer Kraftstoffzapfsäule anfallenden Kraftstoffes so weiterzuentwickeln, daß zugleich eine ordnungsgemäße Überprüfung der Funktion eines Gasrückführungssystems ermöglicht wird, ohne daß es beim Rückverfüllen des Kraftstoffs zu nennenswerten Emissionen kommt.

Zur **Lösung** dieser Aufgabe wird hinsichtlich des Verfahrens vorgeschlagen, daß während des Zuführens des Kraftstoffes in das Sammelgefäß mit Hilfe einer Unterdruckpumpe Umgebungsluft über der an der Zapfpistole ausgebildete Gasansaugöffnungen eines Gasrückführungssystems angesaugt und zur Simulation der Messung des rückgeführten Volumenstroms an Kraftstoffgasen über eine Meßeinrichtung für den Gasvolumenstrom geleitet wird, und daß die Rückführung des Kraftstoffes in den zwischen Erdtank und Saugseite der Pumpe gelegenen Abschnitt der Saugleitung erfolgt.

Mit einem solchen Verfahren werden Verluste während des Rückverfüllens des Kraftstoffes in den Erdtank weitgehend vermieden. Außerdem können während des Rückverfüllens Kraftstoffgase nicht unkontrolliert in die Umgebung entweichen. Da über die Gasansaugöffnungen des Gasrückführungssystems Umgebungsluft angesaugt und zur Simulation er Messung des rückgeführten Volumenstromes an Kraftstoffgasen über die Meßeinrichtung für den Gasvolumenstrom geleitet wird, ist eine ordnungsgemäße Überprüfung der Funktion des Gasrückführungssystem unabhängig davon möglich, ob innerhalb des Sammelgefäßes eine so große Menge an Kraftstoffgasen entsteht, wie dies in der Praxis, also beim Betanken eines Kraftfahrzeuges, der Fall ist. Die Funktionsprüfung des Gasrückführungssystems ist also unabhängig von der Menge der tatsächlich in dem Sammelgefäß entstehenden Kraftstoffgase.

Zum Rückverfüllen des Kraftstoffes in den Erdtank ist es bei dem erfindungsgemäßen Verfahren lediglich erforderlich, das Ventil der Rückführleitung sowie das in jeder Zapfsäule vorhandene Rückschlagventil der Saugleitung zu öffnen.

Zur **Lösung** wird hinsichtlich der Vorrichtung vorgeschlagen, daß die Rückführleitung mit der Saugseite der Pumpe verbunden ist, daß mittels einer Manschette an der Zapfpistole ausgebildete Gasansaugöffnungen eines Gasrückführungssystems vom Sammelgefäß abgeschirmt sind und daß eine Unterdruckpumpe zum Ansaugen der Umgebungsluft über die Gasansaugöffnungen vorgesehen ist. Die Gasansaugöffnungen saugen auf diese Weise nahezu ausschließlich Atmosphärenluft an.

Diese Vorrichtung erfährt dadurch eine Ausgestaltung, daß das Ventil zusätzlich als Schwimmerventil ausgebildet ist. Da das Schwimmerventil erst bei einem Mindestfüllstand in dem Sammelgefäß öffnen kann, ist sichergestellt, daß die Pumpe keine Luft über die Rückführleitung ansaugt. Denn dies würde zu Fehlern bei der von der Meßeinrichtung ermittelten Durchflußmenge führen.

Die Vorrichtung läßt sich baulich stark vereinfachen, wenn entsprechend einer vorteilhaften Weiterbildung der Vorrichtung die Rückführleitung in das Filter mündet. In diesem Fall weist das Filter vorzugsweise einen Deckel auf, der mit einer Öffnung zur Rückführleitung sowie einer Vorrichtung zur Öffnung des Rückschlagventils versehen ist.

Um möglichst relalitätsnahe Prüfbedingungen zu erhalten, weist das Sammelgefäß vorzugsweise eine einem Tankeinfüllstutzen eines Kraftfahrzeuges nachgebildete Einfüllöffnung auf.

Um ein Entweichen der in dem Sammelgefäß angefallenen Kraftstoffgase zu vermeiden, wird schließlich vorgeschlagen, daß die Manschette auf einen an der Zapfpistole ausgebildeten Einfüllstutzen aufsteckbar ist und eine an dem Sammelgefäß ausgebildete Einfüllöffnung um den Einfüllstutzen herum verschließt.

Weitere Einzelheiten und Vorteile des Gegenstandes der Erfindung ergeben sich aus der nachfolgenden Beschreibung der zugehörigen Zeichnung. Darin ist in vereinfachter Form eine erfindungsgemäße Vorrichtung im Rahmen einer Betankungsanlage für flüssige Kraftstoffe dargestellt.

Die Bevorratung des Kraftstoffes erfolgt in einem Erdtank 1, aus dem der Kraftstoff über ein Filter 2 und eine Saugleitung 3 von einer Pumpe 4 gefördert wird. Druckseitig ist der Pumpe 4 eine Meßeinrichtung 5 zur Erfassung der über die Saugleitung 3 geförderten Kraftstoffmenge nachgeschaltet. Die Meßeinrichtung 5 besteht aus einem exakt arbeitenden Kolbenmesser, an den eine Auswerteeinheit mit einer mehrstelligen Anzeige 6 für den Grundpreis der jeweiligen Kraftstoffsorte, die geförderte Litermenge sowie den vom Käufer zu zahlenden Betrag angeschlossen ist. Zu diesem Zweck ist die Auswerteeinheit mit einem einstellbaren Preisrechner versehen, dessen Genauigkeit hinsichtlich der geforderten Kraftstoffmenge von Zeit zu Zeit geprüft werden muß. Nach Durchführung der Prüfung ist gegebenenfalls eine Neueinstellung mit anschließender Verplombung durch die zuständige Aufsichtsbehörde erforderlich. Pumpe 4, Meßeinrichtung 5 und Anzeige 6 sind Bestandteil einer Kraftstoffzapfsäule, die außerdem über ein Gasregulierventil 7 sowie eine ventilbetätigte Zapfpistole 8 mit einem flexiblen Zapfschlauch 9 verfügt. Die dargestellte Kraftstoffzapfsäule verfügt über ein Gasrückführungssystem, welches die beim Betanken eines Kraftfahrzeuges in dessen Tank verdrängten Kraftstoffgase ansaugt und zu dem Erdtank 1 führt. Dem Gasregulierventil 7 kommt die Aufgabe zu, den in den Erdtank 1 rückgeführten Gasvolumenstrom an den von der Pumpe 4 geförderten Kraftstoffvolumenstrom anzupassen. Das Gasregulierventil 7 arbeitet hydraulisch und ist unter Berücksichtigung der Dichte des zu fördernden Kraftstoffgases so abgestimmt, daß bei einem bestimmten Vakuum auf der Gassaugseite der jeweilige Gasvolumenstrom immer der Kraftstoffmenge angepaßt ist. Stoppt der Kraftstoffstrom, so schließt das Gasregulierventil 7 vollständig und dichtet gasseitig vollständig ab. Im Gasregulierventil 7 werden außerdem die im Zapfschlauch 9 koaxial geführten Leitungen für den zugeführten Kraftstoff und das rückgeführte Gas aufgetrennt.

Zu dem Gasrückführungssystem gehören außerdem eine Unterdruckpumpe 11 sowie ein auf der Saugseite der Unterdruckpumpe 11 angeordnetes Ventil 12. Durch Betätigung des Ventils 12 läßt sich ein Bypass 13 mit einer weiteren Meßeinrichtung 14 freigeben. Die weitere Meßeinrichtung 14 dient der Erfassung des von der Unterdruckpumpe 11 angesaugten Gasvolumenstroms.

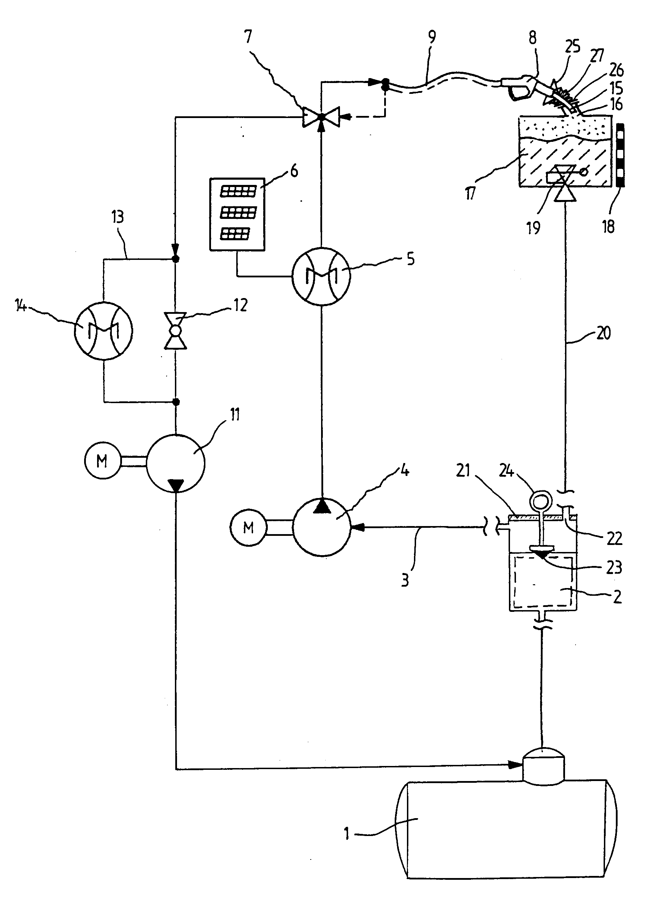

In der Zeichnung ist dargestellt, daß im Rahmen einer Prüfung der Funktion bzw. der Meßgenauigkeit der Kraftstoffzapfsäule ein an der Zapfpistole 8 ausgebildeter Einfüllstutzen 15 in eine Einfüllöffnung 16 eines Sammelgefäßes 17 eingeführt ist. Das Sammelgefäß 17 ist mit einer geeichten Skalierung 18 für die eingefüllte Kraftstoffmenge versehen. An der tiefstgelegenen Stelle des Bodens des Sammelgefäßes 17 ist eine durch ein Schwimmerventil 19 verschließbare Rückführleitung 20 angeschlossen. Das Schwimmerventil 19 ist von Hand betätigbar, gibt in geöffneter Stellung die Rückführleitung 20 infolge der Wirkung eines Schwimmerkörpers allerdings nur dann frei, wenn der Kraftstoff in dem Sammelgefäß 17 eine Mindestfüllhöhe erreicht. Die als flexibler Schlauch ausgebildete Rückführleitung 20 mündet andererseits in den oberen Teil des Filters 2 und steht dort unmittelbar mit der Saugleitung 3 der Pumpe 4 in Verbindung. Zu diesem Zweck ist das Gehäuse des Filters 2 mit einem Deckel 21 versehen, der eine Öffnung 22 für die Rückführleitung 20 aufweist. Innerhalb des Gehäuses des Filters 2 befindet sich ein Rückschlagventil 23, welches mittels eines den Deckel 21 durchragenden Handgriffs 24 von Hand betätigbar ist. Das Rückschlagventil 23 öffnet automatisch durch Anheben, sobald die Pumpe 4 über die Saugleitung 3 Kraftstoff aus dem Erdtank 1 ansaugt. Das vorzugsweise federbelastete Rückschlagventil 23 schließt entweder bei stillstehender Pumpe 4 oder durch den Gewichtsdruck der Flüssigkeit, die sich bei geöffnetem Ventil 19 aufgrund der Flüssigkeit im Sammelgefäß 17 und der Rückführleitung 20 aufbaut. Auf diese Weise läßt sich insbesondere bei Funktionsüberprüfungen, z.B. im Reparaturfall, ein Kraftstoffkreislauf unter Umgehung des Erdtanks 1 realisieren.

Das Sammelgefäß 17 mit der Rückführleitung 20 sowie dem Deckel 21 mit dem Handgriff für die Betätigung des Rückschlagventils 23 sind transportabel ausgestaltet und bilden daher keinen Bestandteil der Betankungsanlage als solcher. Dies gilt ebenso für die Meßeinrichtung 14 für den Gasvolumenstrom. Diese Teile werden vielmehr zum Zwecke des Prüfens und Einstellens der Funktion bzw. Meßgenauigkeit der Kraftstoffzapfsäule vor Ort montiert und nach Durchführung der notwendigen Einstellungen wieder demontiert.

Zum Prüfen der Funktion, beispielsweise im Reparaturfall der Kraftstoffzapfsäule wird der normalerweise des Filter 2 nach oben abschließende Deckel durch den Deckel 21 mit angeschlossener Rückführleitung 20 ersetzt. Neben der jeweiligen Kraftstoffzapfsäule wird des Sammelgefäß 17 aufgestellt und mit der Rückführleitung 20 verbunden. Anschließend erfolgt bei von Hand geschlossenem Schwimmerventil 19 ein normaler Betankungsvorgang, wobei der von der Zapfpistole 8 abgegebene Kraftstoff über die Einfüllöffnung 16 in das Sammelgefäß 17 eingefüllt wird. Hierbei können die in dem Sammelgefäß entstehenden Kraftstoffgase mittels des Gasrückführungssystems abgesaugt werden. Bei Verwendung eines geeichten Sammelgefäßes 17 kann zudem durch Vergleich der eingefüllten Kraftstoffmenge gemäß Skalierung 18 mit der von der Anzeige 6 angezeigten Kraftstoffmenge die Meßgenauigkeit der Kraftstoffzapfsäule ermittelt und gegebenenfalls durch entsprechendes Verstellen des Preisrechners neu eingestellt werden. Während dieses Vorganges ist das Schwimmerventil 19 dauernd geschlossen. Der von der Pumpe 4 geförderte Kraftstoff wird also ausschließlich dem Erdtank 1 über das Rückschlagventil 23 und die Saugleitung 3 entnommen.

Bei der Prüfung des Gasrückführungssystems ist das Ventil 12 geschlossen, so daß das von der Unterdruckpumpe 11 angesaugte Gas über die Meßeinrichtung 14 für den Gasvolumenstrom in den Erdtank 1 gelangt. Bei dem angesaugten Gas kann es sich insbesondere auch um die Umgebungsluft handeln. Auf diese Weise wird die Explosionsgefahr während der Prüf- und Einstellarbeiten auf ein Minimum reduziert. Um sicherzustellen, daß keine Kraftstoffgase, sondern ausschließlich Umgebungsluft in den Bereich der Ansaugöffnungen des Einfüllstutzens 15 gelangt, ist auf den Einfüllstutzen 15 eine Manschette 25 aufsteckbar. Diese besteht aus einer zum Griff der Zapfpistole 8 hin offenen, trichterförmigen Abschirmung, welche die Absaugöffnungen des Gasrückführungssystems freiläßt, sowie einem an seiner Vorderseite mit einer Schließplatte 26 versehenen Balgen 27. Die Schließplatte 26 verschließt die Einfüllöffnung 16 des Sammelgefäßes 17, so daß während der Prüf- und Einstellarbeiten keine Kraftstoffgase in die Atmosphäre entweichen können.

Der Gasvolumenstrom wird durch Veränderung der Charakteristik des Gasregulierventils 7 so eingestellt, daß sich das gewünschte Verhältnis zwischen der Kraftstoffmenge des Betankungssystems und dem Gasvolumenstrom des Gasrückführungssystems ergibt.

Nach Abschluß der Prüf- und Einstellarbeiten wird zunächst des Ventil der Zapfpistole 8 geschlossen und dadurch der Betankungsvorgang abgebrochen. Dann wird das Rückschlagventil 23 durch Handbetätigung geöffnet, so daß der in dem Sammelgefäß 17 enthaltene Kraftstoff über das Schwimmerventil 19 und die Rückführleitung 20 in das Gehäuse des Filters 2 und von dort weiter in den Erdtank 1 gelangt. In diesem Fall bleibt das Schwimmerventil 19 zunächst geöffnet.

### Bezugszeichenliste

- 1: Erdtank
- 2: Filter
- 3: Saugleitung
- 4: Pumpe
- 5: Meßeinrichtung
- 6: Anzeige
- 7: Gasregulierventil
- 8: Zapfpistole
- 9: Zapfschlauch
- 11: Unterdruckpumpe
- 12: Ventil
- 13: Bypass
- 14: Meßeinrichtung für den Gasvolumenstrom
- 15: Einfüllstutzen
- 16: Einfüllöffnung
- 17: Sammelgefäß
- 18: Skalierung
- 19: Schwimmerventil
- 20: Rückführleitung
- 21: Deckel
- 22: Öffnung
- 23: Rückschlagventil
- 24: Handgriff
- 25: Manschette
- 26: Schließplatte
- 27: Balgen

## Patentansprüche

1. Verfahren zum Sammeln des beim Prüfen und Einstellen der Funktion bzw. Meßgenauigkeit einer Kraftstoffzapfsäule anfallenden Kraftstoffes, bei dem der Kraftstoff mittels einer Pumpe (4) einem Erdtank (1) entnommen und über eine vorzugsweise als Kolbenmesser ausgebildete Meßeinrichtung (5) mit zugehöriger Anzeige für Grundpreis, Litermenge und zu zahlendem Betrag und eine ventilbetätigte Zapfpistole (8) einem vorzugsweise geeichten Sammelgefäß (17) zugeführt und nach erfolgtem Prüfen und Einstellen aus dem Sammelgefäß (17) über eine durch ein Ventil (19) verschließbare Rückführleitung (20) in den Erdtank zurückgeführt wird,
**dadurch gekennzeichnet,**
daß während des Zuführens des Kraftstoffes in das Sammelgefäß (19) mittels einer Unterdruckpumpe (11) Umgebungsluft über an der Zapfpistole (8) ausgebildete Gasansaugöffnungen eines Gasrückführungssystems angesaugt und zur Simulation der Messung des rückgeführten Volumenstroms an Kraftstoffgasen über eine Meßeinrichtung (14) für den Gasvolumenstrom geleitet wird und daß die Rückführung des Kraftstoffes in den zwischen Erdtank (1) und Saugseite der Pumpe (4) gelegenen Abschnitt der Saugleitung (3) erfolgt.

2. Vorrichtung zum Sammeln des beim Prüfen und Einstellen der Funktion bzw. der Meßgenauigkeit einer Kraftstoffzapfsäule anfallenden Kraftstoffes, der mittels einer Pumpe (4) über ein Filter (2) mit Rückschlagventil (23) aus einem Erdtank (1) förderbar und über eine vorzugsweise als Kolbenmesser ausgebildete Meßeinrichtung (5) mit zugehöriger Anzeige (6) für Grundpreis, Litermenge und zu zahlendem Betrag sowie über eine ventilbetätigte Zapfpistole (8) der Einfüllöffnung (16) eines vorzugsweise geeichten Sammelgefäßes (17) zuführbar ist, an das eine durch ein Ventil (19) verschließbare Rückführleitung (20) zur Rückführung des Kraftstoffes in den Erdtank (1) angeschlossen ist,
**dadurch gekennzeichnet,**
daß die Rückführleitung (20) mit der Saugseite der Pumpe (4) verbunden ist, daß mittels einer Manschette (25) an der Zapfpistole (8) ausgebildete Gasansaugöffnungen eines Gasrückführungssystems (7,11) vom Sammelgefäß (17) abgeschirmt sind und daß eine Unterdruckpumpe (11) zum Ansaugen der Umgebungsluft über die Gasansaugöffnungen vorgesehen ist.

3. Vorrichtung nach Anspruch 2, dadurch gekennzeichnet, daß das Ventil (19) zusätzlich als Schwimmerventil ausgebildet ist.

4. Vorrichtung nach Anspruch 2, dadurch gekennzeichnet, daß die Rückführleitung (20) in das Filter (2) mündet.

5. Vorrichtung nach Anspruch 4, dadurch gekennzeichnet, daß das Filter (2) einen Deckel (21) aufweist, der mit einer Öffnung (22) zur Rückführleitung (20) sowie einer Vorrichtung (24) zur Öffnung des Rückschlagventils (23) versehen ist.

6. Vorrichtung nach Anspruch 2, dadurch gekennzeichnet, daß das Sammelgefäß (17) eine einem Tankeinfüllstutzen eines Kraftfahrzeuges nachgebildete Einfüllöffnung (16) aufweist.

7. Vorrichtung nach Anspruch 2, dadurch gekennzeichnet, daß die Manschette (25) auf einen an der Zapfpistole (8) ausgebildeten Einfüllstutzen (15) aufsteckbar ist und eine an dem Sammelgefäß (17) ausgebildete Einfüllöffnung (16) um den Einfüllstutzen (15) herum verschließt.

## Claims

1. Method of collecting the fuel which is dispensed in the testing and adjustment of the functioning and measuring accuracy of a fuel dispenser, wherein the fuel is taken by means of a pump (4) from a buried tank (1) and fed via a measuring device (5), preferably in the form of a piston meter, with an appertaining display for the basic price, number of litres and amount to be paid, and via a valve-operated pump nozzle unit (8) to a preferably calibrated collecting vessel (17), and on completion of the testing and adjustment is returned from the collecting vessel (17) to the buried tank via a return pipe (20) which can be closed by a valve (19), characterized in that during the feeding of the fuel into the collecting vessel (17) atmospheric air is drawn in by means of a vacuum pump (11) via gas suction openings, formed on the pump nozzle unit (8), of a gas return system and is passed through a gas volume flow measuring device (14) in order to simulate the measurement of the returned volume flow of fuel gases, and in that the fuel is returned into the portion of the suction pipe (3) situated between the buried tank (1) and the suction side of the pump (4).

2. Apparatus for collecting the fuel which is dispensed in the testing and adjustment of the functioning and measuring accuracy of a fuel dispenser and which can be delivered by means of a pump (4) via a filter (2) having a nonreturn valve (23) from a buried tank (1) and can be fed via a measuring device (5), preferably in the form of a piston meter, with an appertaining display (6) for the basic price, number of litres and amount to be paid, and via a valve-operated pump nozzle unit (8) to the filling opening (16) of a preferably calibrated cOllecting vessel (17), to which a return pipe (20), which can be closed by a valve (19), is connected for the return of the fuel into the buried tank (1), characterized in that the return pipe (20) is connected to the suction side of the pump (4), in that gas suction openings, formed on the pump nozzle unit (8), of a gas return system (7, 11) are screened from the collecting vessel (17) by means of a collar (25), and in that a vacuum pump (11) is provided to draw in atmospheric air via the gas suction openings.

3. Apparatus according to Claim 2, characterized in that the valve (19) is additionally in the form of a float valve.

4. Apparatus according to Claim 2, characterized in that the return pipe (20) leads into the filter (2).

5. Apparatus according to Claim 4, characterized in that the filter (2) has a cover (21) which is provided with an opening (22) leading to the return pipe (20) and also with a device (24) for opening the nonreturn valve (23).

6. Apparatus according to Claim 2, characterized in that the collecting vessel (17) has a filling opening (16) copying a tank filler neck of a motor vehicle.

7. Apparatus according to Claim 2, characterized in that the collar (25) can be mounted on a filling nozzle (15) formed on the pump nozzle unit (8) and closes a filling opening (16), formed on the collecting vessel (17), around the filling nozzle (15).

## Revendications

1. Procédé pour la collecte du carburant utilisé lors du contrôle et du réglage du fonctionnement et de la précision de mesure d'un poste à carburant, dans lequel le carburant est prélevé au moyen d'une pompe (4) dans une citerne enterrée (1), est transféré à un récipient collecteur de préférence étalonné (17) à travers un dispositif de mesure (5), conçu de préférence sous la forme d'un compteur à piston et muni d'un affichage correspondant au prix de base, à la quantité en litres et au montant à payer, et à travers un pistolet (8), et est renvoyé, une fois le contrôle et le réglage terminés, du récipient collecteur (17) à la citerne enterrée par une conduite de refoulement (20) pouvant être fermée par une valve (19), caractérisé en ce que, lors du transfert du carburant dans le récipient collecteur (19), de l'air ambiant est aspiré, au moyen d'une pompe à dépression (11), à travers des orifices d'aspiration de gaz ménagés sur le pistolet (8) et appartenant à un système de refoulement de gaz et, pour simuler la mesure du débit de gaz de carburant refoulé, passe à travers un dispositif (14) de mesure du débit de gaz, et en ce que le refoulement du carburant s'effectue dans le segment de la conduite d'aspiration (3) situé entre la citerne enterrée (1) et le côté aspiration de la pompe (4).

2. Dispositif pour la collecte du carburant utilisé lors du contrôle et du réglage du fonctionnement et de la précision de mesure d'un poste à carburant, ledit carburant pouvant être prélevé dans une citerne enterrée (1) au moyen d'une pompe (4) à travers un filtre (2) à valve anti-retour (23) et pouvant être transféré, à travers un dispositif de mesure (5) conçu de préférence sous la forme d'un compteur à piston et équipé d'un affichage (6) correspondant au prix de base, à la quantité en litres et au montant à payer ainsi qu'à travers un pistolet (8) actionné par une valve, à l'ouverture de remplissage (16) d'un récipient collecteur de préférence étalonné (17) auquel est reliée une conduite de refoulement (20) pouvant être fermée par une valve (19) et servant à refouler le carburant dans la citerne enterrée (1), caractérisé en ce que la conduite de refoulement (20) est reliée au côté aspiration de la pompe (4), en ce que les orifices d'aspiration de gaz ménagés sur le pistolet (8) et appartenant à un système de refoulement de gaz (7, 11) sont isolés du récipient collecteur (17) au moyen d'un manchon (25), et en ce qu'il est prévu une pompe à dépression (11) pour aspirer l'air ambiant à travers les orifices d'aspiration de gaz.

3. Dispositif selon la revendication 2, caractérisé en ce que la valve (19) est également conçue sous la forme d'une valve à flotteur.

4. Dispositif selon la revendication 2, caractérisé en ce que la conduite de refoulement (20) débouche dans le filtre (2).

5. Dispositif selon la revendication 4, caractérisé en ce que le filtre (2) comporte un couvercle (21) qui est pourvu d'un orifice (22) relié à la conduite de refoulement (20) ainsi que d'un dispositif (24) pour ouvrir la valve anti-retour (23).

6. Dispositif selon la revendication 2, caractérisé en ce que le récipient collecteur (17) comporte une ouverture de remplissage (16) conçue comme la tubulure de remplissage du réservoir d'un véhicule automobile.

7. Dispositif selon la revendication 2, caractérisé en ce que le manchon (25) peut être emmanché sur une tubulure de remplissage (15) réalisée sur le pistolet (8) et obture une ouverture de remplissage (16) qui est réalisée sur le récipient collecteur (17) et qui entoure la tubulure de remplissage (15).
